# EUROPEAN PATENT APPLICATION

(11) **EP 3 163 064 A1**
(43) Date of publication of application: **03.05.2017**
(21) Application number: 16175475.9
(22) Date of filing: 21.06.2016
(51) Int. Cl.: F02M 25/12, F01N 5/02, F02B 43/10

(54) **ENGINE GROUP COMPRISING A MIXED FUEL ENGINE, AND FUEL SUPPLYING METHOD THEREOF**

(30) Priority: 29.10.2015 IT UB20155235
(71) Applicant: STMicroelectronics S.r.l., 20864 Agrate Brianza (MB) (IT)
(72) Inventor: CREMA, Paolo, 20871 VIMERCATE (IT)
(74) Representative: Franzolin, Luigi

(57) **Abstract**

An engine group (1) comprising an internal combustion engine (2), a supply system (6, 7, 8, 22) for supplying the engine (2) with a mixed fuel comprising hydrogen, an electrolytic cell (17) for the production of hydrogen and oxygen starting from water or vapour, and a converter device (9) for generation of electrical energy starting from the thermal energy of the exhaust gases of the engine (2), wherein at least part of the electrical energy generated by the converter device (9) is used in the electrolytic cell (17) for the production of hydrogen.

## Description

The present invention relates to an engine group comprising a mixed fuel internal combustion engine, in particular an engine that uses conventional fuel enriched with hydrogen. The present invention further regards a method for supplying the aforesaid engine.

The present invention finds a preferred, albeit not exclusive, application in internal combustion engines of motor vehicles, to which reference will be made in what follows, without this implying any loss of generality.

As is known, in the automotive industry there is a pressing need to reduce pollutant emissions. One of the paths followed in order to pursue this aim is the enrichment of conventional fuels, for example methane or natural gas, with hydrogen.

It is further known that making available hydrogen on board a motor vehicle is problematical.

According to a first known technique, hydrogen may be stored in the vehicle, in the form of liquid or compressed gas, in a purposely provided tank. The difficulty of management of hydrogen and the absence of a provisioning network render, however, this solution far from commercially attractive.

Another known possibility is to produce hydrogen on board the vehicle via electrolysis. The research activities so far conducted in this direction have, however, proven unsatisfactory from the energy standpoint in so far as the production of electrical energy absorbed by the process of electrolysis via the on-board alternator determines an increase in consumption that renders the process not economically viable.

The aim of the present invention is to provide an engine group comprising a mixed fuel internal combustion engine, and a method for supplying this engine that will solve the problems highlighted previously.

The aforesaid aim is achieved by an internal combustion engine according to claim 1 and by a supply method according to claim 6.

Generation of hydrogen on board the vehicle, at the expense of the energy of the exhaust gases that would be in any case dispersed in the environment, enables a considerable reduction in consumption levels, as well as in emissions.

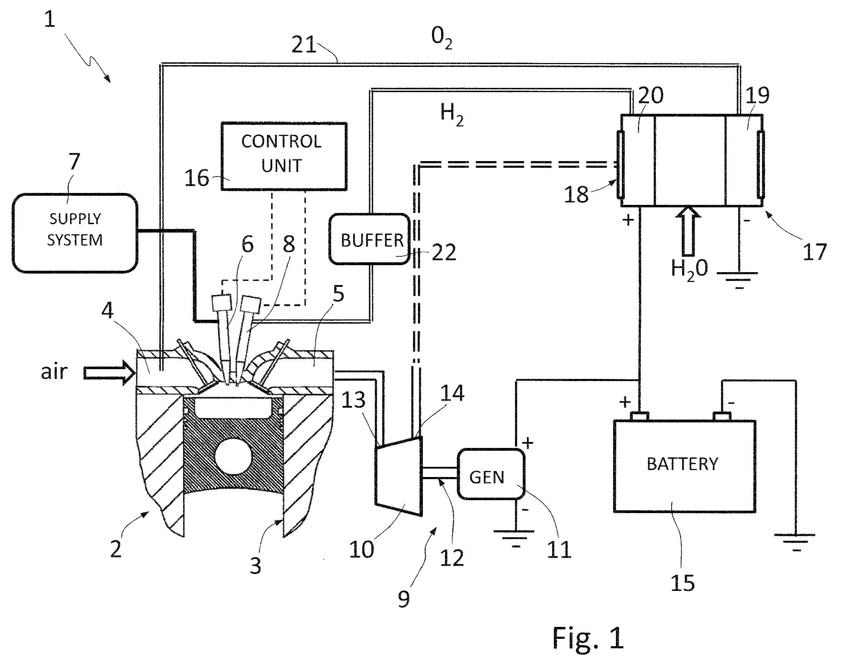

For a better understanding of the present solution, an embodiment thereof is described in what follows with reference to the attached Figure 1, which illustrates a functional diagram of the present engine group.

With reference to Figure 1, designated as a whole by 1 is an engine group for a vehicle (not illustrated).

The engine group 1 comprises an internal combustion engine 2 provided with at least one cylinder 3, an intake manifold 4, and an exhaust manifold 5.

The engine 2 comprises, for each cylinder 3, a primary injector 6 connected to a system 7 for supply of a primary fuel, for example methane or natural gas, of a known type. Alternatively, any other conventional fuel, such as petrol, diesel oil, LPG, biofuels, or mixtures thereof, may be used as primary fuel.

The engine 2 further comprises, for each cylinder 3, a secondary injector 8 for enrichment of the primary fuel with hydrogen, as will be described in what follows.

The engine group 1 comprises a turbo-generator device 9 for recovering the thermal energy of the exhaust gases and converting it into electrical energy. The turbo-generator device 9 comprises a turbine 10 and an electric generator 11 rotationally connected to a rotor of the turbine 10 via a shaft 12.

The turbine 10 has an inlet 13 connected to the exhaust manifold 5 of the engine 2 and an outlet 14.

The electric generator 11 is connected to a battery 15 of the vehicle, in parallel to an alternator of a conventional type (not illustrated).

The injectors 6, 8 are controlled by a control unit 16.

The engine group 1 further comprises an electrolytic cell 17 designed to split water in the liquid or vapour state for producing hydrogen and oxygen.

The electrolytic cell 17, supplied by the battery 15, may be of a conventional (alkaline) type, operating at ambient temperature with an efficiency in the region of 75%. Alternatively, according to a preferred embodiment, the electrolytic cell 17 may be of an SOEC (solid-oxide electrolyser cell) type operating at high temperature, for example 700-900°C, with an efficiency higher than 90%.

In this case, the heat for bringing the electrolytic cell 17 to the operating temperature may be provided by the residual thermal energy of the exhaust gases downstream of the turbine 10, via a heat-exchange device 18 (illustrated schematically). The water is supplied to the cell in the form of vapour, which may be produced by a parallel cooling circuit of the engine, contributing to cooling of the engine block.

The electrolytic cell 17 has an anode 19 in which oxygen (O₂) is produced and a cathode 20 in which hydrogen (H₂) is produced.

The anode 19 is connected to the intake manifold 4 of the engine 1 by an oxygen-supply line 21 so that the oxygen produced will mix with the air drawn in by the engine 2.

The cathode 20 is connected to a buffer 22, having a conveniently low capacity (for example, 0.5 litres, equivalent to 4.5 mg of hydrogen at the temperature of 0°C and at the pressure of 1 bar - density: 0.090 kg/m³ - or alternatively at 10 bar at ambient temperature), for temporary storage of the hydrogen produced, which is in turn connected to the secondary injector 7. Hydrogen may be maintained in the buffer 22 at a pressure of approximately 10 bar.

Operation of the engine group 1 is described in what follows. The conventional fuel and the hydrogen produced by the electrolytic cell 17 are injected into the cylinders 3 via the respective injectors 6, 8. The oxygen produced in the electrolytic cell 17 is introduced into the intake manifold 4.

Use of a mixed fuel formed by a mixture of conventional fuel with hydrogen is per se known. Hydrogen has the effect of increasing the rate of the flame front, thus improving the performance, and of reducing CO₂ emissions. The supply of mixed fuel enriched with hydrogen makes it possible to obtain CO₂ emissions reduced by 15-20% with respect to methane and by more than 30% with respect to petrol.

Tests conducted on an automobile Fiat Panda 1200 cc 52 CV operating with natural gas (NG) enriched with hydrogen or hydromethane (NG 70 vol%, H₂ 30 vol%) have shown levels of consumption of approximately 25 km/kg of mixture, i.e., of approximately 4 kg/100 km, in mixed driving.

An amount of 4 kg of NG/H₂ mixture in a volume ratio of 70:30 are equivalent to 197.34 g (2.217 Nm³) of hydrogen. The electrical energy required for production of hydrogen via the electrolytic cell 15 may be estimated as being approximately 4.9 kWh/Nm³ with an efficiency of 70% (at ambient temperature) or 3 kWh/Nm³ with an efficiency of 95% (at 800°C), i.e., 10.86 or 6.65 kWh/100 km, respectively. The energy recovered by the turbo-generator device 9 is amply sufficient for supply of the electrolytic cell 17.

It follows that, thanks to the turbo-generator device 8, the hydrogen used may be produced in the electrolytic cell 17 at the expense of the thermal energy of the exhaust gases that would in any case be lost, i.e., "at zero cost" as compared to an engine of a conventional type.

Consequently, in addition to the advantages mentioned above, there derives an overall reduction of consumption of approximatelyl5-20%, and an extension of the operating range as compared to use of natural gas alone.

The oxygen produced by the electrolytic cell 17 and sent to the intake manifold via the line 21 in turn has a beneficial effect on combustion, in so far as the excess of oxygen reduces formation of nitrogen oxides (NOx).

Finally, it is clear that modifications and variations may be made to the engine group described herein, without thereby departing from the scope defined by the claims.

For example, instead of the injection of the conventional fuel and of hydrogen via separate injectors, it is possible to pre-mix them and inject the mixture using a single injector.

## Claims

1. An engine group (1) comprising:
an internal combustion engine (2);
a supply system (6, 7, 8, 22) for supplying the engine (2) with a mixed fuel comprising hydrogen;
an electrolytic cell (17) for the production of hydrogen and oxygen starting from water or vapour; and
a converter device (9) for generation of electrical energy starting from the thermal energy of the exhaust gases of the engine (2), at least part of the electrical energy generated by the converter device (9) being used in the electrolytic cell (17) for the production of hydrogen.

2. A group as claimed in claim 1, **characterized in that** the converter device (9) comprises a turbine (10) operated by the exhaust gases and an electric generator (11) driven by the turbine (10).

3. A group as claimed in claim 1 or claim 2, **characterized in that** the electrolytic cell (17) is of an SOEC (solid-oxide electrolytic cell) type.

4. A group as claimed in any one of the preceding claims, **characterized by** comprising a line (21) for supplying oxygen produced in the electrolytic cell (17) to an intake (4) of the engine.

5. A group as claimed in any one of the preceding claims, **characterized by** comprising heat-exchange means (18) for heating the electrolytic cell (17) via residual thermal energy of the exhaust gases.

6. A method for supplying an internal combustion engine (2), comprising the steps of:
recovering thermal energy from the exhaust gases of the engine (2) by conversion into electrical energy;
using at least part of said electrical energy for supplying an electrolytic cell (17);
splitting water or vapour via the electrolytic cell (17) for generating hydrogen and oxygen; and
supplying the engine (2) with a mixed fuel comprising said hydrogen generated in the electrolytic cell (17).

7. A method as claimed in claim 6, **characterized in that** the mixed fuel comprises a conventional fuel chosen in the group comprising methane, natural gas, petrol, diesel oil, biofuels, and mixtures thereof.

8. A method as claimed in claim 6 or claim 7, **characterized in that** conversion of the thermal energy of the exhaust gases into electrical energy is carried out via a turbine (10) operated by the exhaust gases and an electric generator (11) driven by the turbine (10).

9. A method as claimed in any one of claims 6 to 8, **characterized in that** the electrolytic cell (17) is of an SOEC (solid-oxide electrolytic cell) type.

10. A method as claimed in any one of claims 6 to 9, **characterized in that** it comprises the step of supplying oxygen generated in the electrolytic cell (17) to an intake (4) of the engine.

11. A method as claimed in any one of claims 6 to 10, **characterized by** comprising the step of heating the electrolytic cell (17) by residual thermal energy of the exhaust gases.
